# EUROPEAN PATENT SPECIFICATION

(11) **EP 0 715 759 B1**
(45) Date of publication and mention of the grant of the patent: **23.09.1998**
(21) Application number: 94922153.5
(22) Date of filing: 18.07.1994
(51) Int. Cl.: G11B 5/78, G11B 15/06

(54) **MAGNETIC RECORDING TAPE**
MAGNETISCHES AUFZEICHNUNGSBAND
BANDE D'ENREGISTREMENT MAGNETIQUE

(30) Priority: 24.08.1993 US 110864; 24.08.1993 US 111175; 24.08.1993 US 111176
(43) Date of publication of application: 12.06.1996
(60) Divisional application: 97119605.0
(73) Proprietor: Imation Corp., Oakdale, MN 55128 (US)
(72) Inventor: YOUNGQUIST, Robert, J., Saint Paul, MN 55133-3427 (US); KUTA, Leroy, A., Saint Paul, MN 55133-3427 (US); KELLY, Michael, J., Saint Paul, MN 55133-3427 (US); SWENSON, James, W., Saint Paul, MN 55133-3427 (US); NAFTULYEV, Vladimir, Saint Paul, MN 55133-3427 (US); JEWETT, Richard, E., Saint Paul, MN 55133-3427 (US); GERFAST, Sten, R., Saint Paul, MN 55133-3427 (US)
(74) Representative: Hilleringmann, Jochen, Dipl.-Ing.
(86) International application number: US9408003
(87) International publication number: WO9506313

(56) References cited:
- EP-A- 0 014 311
- WO-A-90/12393
- BE-A- 796 192
- DE-A- 4 011 694
- PATENT ABSTRACTS OF JAPAN vol. 8, no. 55 (P-260) (1492) 13 March 1984 & JP,A,58 203 620 (FUJITSU K.K.) 28 November 1983

## Description

The present invention relates generally to magnetic recording, and more specifically to magnetic recording tape having information provided thereon relating to the characteristics of the tape.

The use of magnetic recording tape to store information is well known. One method of recording on such tape is to provide a read/write head that rotates rapidly as the tape is passed by it, thereby providing data tracks which span a portion of the width of the tape. Examples of such data tracks include helical and arcuate data tracks.

It is often desirable to be able to provide instructions on a magnetic tape that will inform a magnetic tape drive about the characteristics of a tape that has been loaded in the drive. For example, the instructions could indicate the recording density of the tape, thereby allowing the drive to properly read and/or write on the tape. The instructions could also indicate when the drive has reached the end of the tape, thereby signaling the drive to reverse the direction that it moves the tape.

Various methods have been used to provide such information on the tape. One method involves providing one or more holes near the ends of the tape. This method can be disadvantageous because it may require the use of a separate sensor to sense the holes. Another disadvantage of this method is that the holes weaken the tape, thereby increasing the likelihood that the tape will be stretched or torn in the portions around the holes. The holes can also create "print-through", which occurs when tape is wrapped around the tape hub and additional layers of tape are pressed over the holes, causing the holes to create indentations in the additional layers of tape, which may impair the read/write process. Furthermore, in current implementations of this method, the method of detecting the presence of the holes can be unreliable.

The use of magnetic recording tape to store information is well known. One commonly used method of recording on such tape is to provide a read/write head that rotates rapidly as the tape is passed by it, thereby providing data tracks that are transverse to the length of the tape. Examples of such data tracks include helical and arcuate data tracks.

From EP-A-0 014 311 a magnetic tape is known wherein the tape has two end and a plurality of servo tracks parallel to the length of the tape. The servo tracks span at least a portion of the width of the tape. At least one portion of the tape is provided with a magnetic pattern which comprises a plurality of parallel, magnetically polarized stripes spaced transversely across the width of the tape, wherein the stripes are parallel to the length of the tape. This is reflected in the preamble of claim 1.

It is the object of the present invention to provide a magnetic recording tape with alternative stripes for storing data which can be easily read by a scanning head or the like device.

According to the invention, this object is solved by a tape comprising the features of claim 1 or 4, respectively. The subclaims are directed to preferred embodiments of the invention.

Accordingly, the present invention provides a magnetic tape which can provide information to a drive, such as the type of tape being used, whether the drive has reached the end of the tape, whether the tape is centered, etc. A pattern of a plurality of parallel magnetically polarized stripe parallel to the length of the tape is provided on at least one portion of the tape. The stripes are magnetically polarized substantially transverse to its length and can be recorded to a depth sufficient to ensure that a plurality of data tracks spanning at least a portion of the width of the tape may be recorded over the stripe without significantly altering the magnetic properties of the stripe. The magnetic polarization of each of the stripes of the pattern is uniform and continuous and the stripes may be long enough to allow an arcuate scanning head to pass over the stripes several times, whereby the arcuate scanning head can sense the presence or absence of the stripes.

A plurality of recording tracks spanning at least a portion of the width of the tape may be recorded over the stripe. The stripe can be recorded at one or both ends of the tape. Further stripes, identical to the first stripe, can be provided parallel to the first stripe and transversely spaced from it along the width of the tape to form a pattern of stripes.

The present invention also includes a magnetic tape having a beginning portion, a middle portion, and an end portion. The tape has a magnetic pattern on the beginning portion and another magnetic pattern on the end portion. Each pattern has a plurality of parallel, magnetically polarized stripes spaced transversely across the width of the tape, as described above.

Preferably, the two magnetic patterns differ from each other. Another pattern of magnetic stripes may be provided on the middle portion of the tape. This pattern preferably differs from the first two patterns and may be positioned at the mid-point of the length of the tape.

An additional magnetically polarized stripe parallel to the length of the tape can be provided adjacent the magnetic pattern on one or both sides of the pattern.

As used herein, the term "read/write" means read and/or write.

The invention will be explained in more detail in connection with preferred embodiment depicted in the drawing, in which:

FIGURE 1 shows a strip of magnetic tape according to the present invention.

FIGURE 2 shows a graph of the detected signal versus time for a transverse scanning head as it passes over a portion of the tape of FIGURE 1 according to the present invention.

FIGURES 3A-3C show alternative magnetizations for the magnetically polarized stripes of FIGURE 1.

FIGURES 4A-4C show the amplitudes of the signal generated as the traverse scanning head passes over the stripes of FIGURES 3A-3C, respectively.

FIGURES 5A-5B show alternative configurations of magnetically polarized stripes on the tape of FIGURE 1 according to the present invention to provide centering of the transverse scanning head in the tape.

FIGURES 6A-6C show various insert timing angles which are generated by the stripe of FIGURE 5A when a transverse scanning head passes over a magnetically polarized stripe according to the present invention.

FIGURE 7 is a schematic diagram showing how the signals from the pattern can be separated from the signals from the data tracks.

FIGURE 8 is an exploded schematic perspective view of a magnetic recording head for creating the magnetically polarized stripes of FIGURE 1.

FIGURE 9 is a schematic perspective view of the magnetic core structure used in the head of FIGURE 8.

FIGURE 10 is an exploded schematic perspective view of a magnetic recording head for creating the magnetically polarized stripes of FIGURE 1.

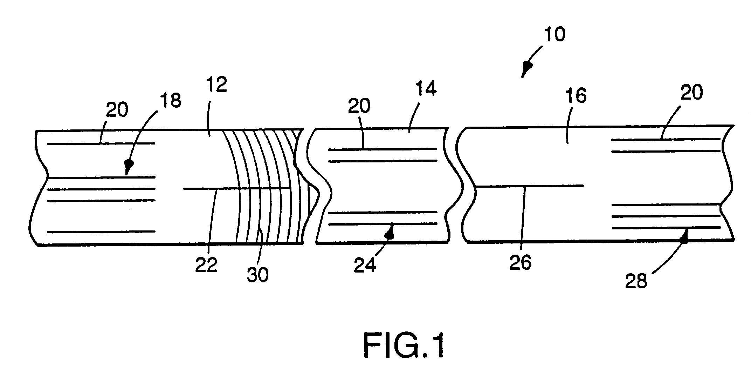

A strip of magnetic recording tape having magnetically recorded stripes according to the present invention is shown in FIGURE 1. Magnetic recording tape 10 is comprised of beginning portion 12, middle portion 14, and end portion 16. Beginning portion 12 has a pattern 18 of magnetically polarized stripes 20 provided at the beginning of the beginning portion. Stripes 20 in pattern 18 are parallel to each other and parallel to the length (longitude) of tape 10. Stripes 20 are polarized in the plane of tape 10 in the direction substantially perpendicular to the length of the tape.

A stripe 22 is identical to any of stripes 20. Stripe 22 is positioned on beginning portion 12 of tape 10 on the side of pattern 18 nearer the middle of the length of tape. Stripe 22 may be placed along the centerline of tape 10.

Middle portion 14 of tape 10 has a pattern 24 of magnetically polarized stripes 20. Pattern 24 can be any of a number of different patterns, but is preferably not identical to pattern 18. Pattern 24 can be placed at the exact mid-point of the length of tape 10, or it can be placed at another location along the length of the tape. Additional patterns (not shown) can be provided along the length of tape 10 between beginning portion 12 and end portion 16.

End portion 16 has a pattern 28 of stripes 20. Pattern 28 can be any of a number of different patterns, but is preferably not identical to patterns 18 and 24. A stripe 26 is identical to any of stripes 20. Stripe 26 is positioned on end portion 16 of tape 10 on the side of pattern 28 nearer the middle of the length of the tape. Stripe 26 may be placed along the centerline of tape 10.

Data tracks 30 span at least a portion of the width of tape 10, and can be helical tracks, or arcuate tracks as shown in FIGURE 1. Data tracks 30 are preferably substantially perpendicular to polarized stripes 20. Although not shown in FIGURE 1, data tracks 30 can optionally extend along the entire length of tape 10.

The curvature of data tracks 30 and the spacing between them is exaggerated in FIGURE 1 for the purpose of illustration. As an arcuate scanning head (not shown) moves across the width of tape 10, the radius of curvature of its path would be symmetric about the center line of the tape except for the fact that the tape is moving longitudinally as the scanning head is passing over the tape. This effect is also exaggerated in FIGURE 1. Stripes 20 are preferably recorded in tape 10 to a depth sufficient to ensure that data tracks 30 may be recorded over the stripes without significantly altering the magnetic properties of the stripes.

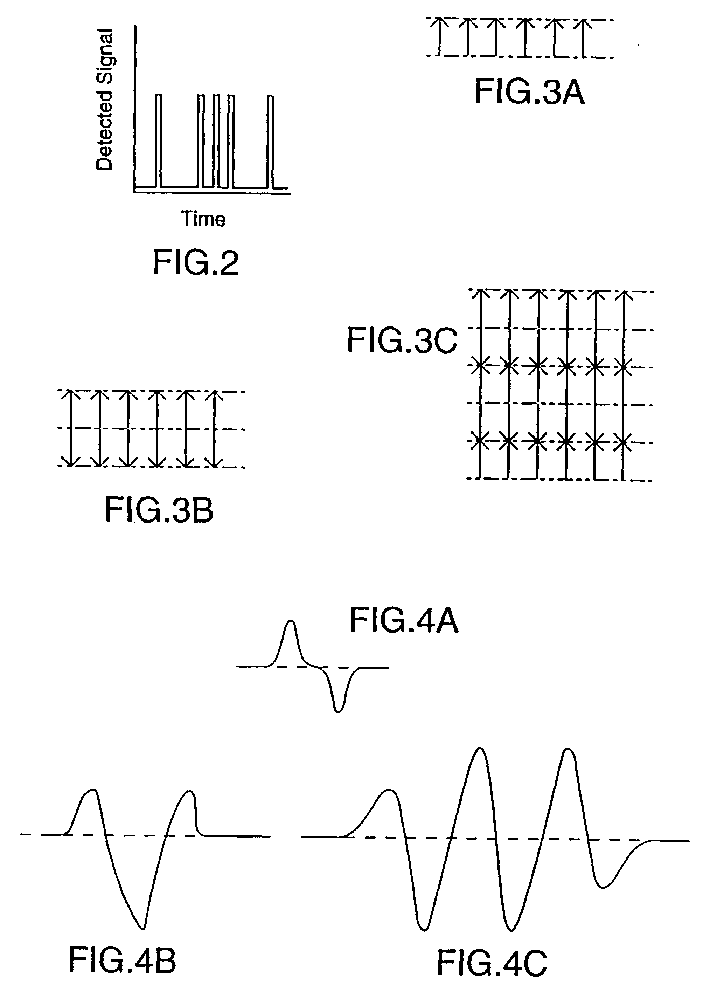

As a transverse scanning head (e.g., helical or arcuate) passes magnetically polarized stripes 20, the magnetic head senses the presence or absence of the stripes. The signals generated by the transverse scanning head as it passes over stripes 20 can be graphed as a function of time. Each such graph would differ depending upon the pattern of stripes 20 provided. For example, the graph for pattern 18 of stripes 20 on beginning portion 12 is shown in FIGURE 2. As the magnetic head passes over the width of tape 10 along data tracks 30, it passes over the first stripe 20, then over the middle three stripes, and then over the last stripe. Thus, the spacing of the detected signals shown in FIGURE 2 corresponds to the spacing of stripes 20 in pattern 18.

Each magnetically polarized stripe 20 can be comprised of a single magnetically written signal having north and south poles on either side of the signal centerline, as shown in FIGURE 3A. As the transverse scanning head passes across the magnetically written signal, it generates a signal resembling the signal shown in FIGURE 4A.

In the alternative, stripe 20 can be comprised of two magnetically written signals having north and south poles on each side of the centerline of the two signals, wherein the two signals are aligned so that the direction of polarization of each signal is reversed with respect to the other signal, as shown in FIGURE 3B. A profile of the signal is shown in FIGURE 4B.

Furthermore, each stripe 20 can be comprised of further adjacent magnetically written signals, as shown in FIGURE 3C. This increases the number of cycles of the signal generated in FIGURE 2. A profile of the signal is shown in FIGURE 4C.

The patterns of stripes 20 can be selected to provide information about the characteristics of tape 10 to a magnetic tape drive (not shown). The drive would have to be programmed to recognize a particular pattern as representing a particular tape characteristic. The pattern are long enough to provide for the transverse scanning head to pass over it several times thereby ensuring that the pattern will be properly recognized by the drive. The pattern of stripes 20 is preferably recorded to a depth sufficient to ensure that data tracks 30 may be recorded over the stripes without significantly altering the magnetic properties of the stripes.

According to one method of the present invention, a pattern of stripes 20 can be used to provide information to the drive about the type of tape 10 being used, such as tape length, media type, recording density, format, etc. According to another method of the present invention, a pattern of stripes 20 could also be provided at one end of the length of tape 10 to indicate that the magnetic tape drive has reached the end of the tape. A second pattern of stripes 20 could be provided at the other end of tape 10 to indicate that the drive has reached the second end of the tape. A pattern of stripes 20 could also be used for indexing to indicate to the drive which portion of the length of tape is passing by the transverse scanning head. One such pattern could be provided at the mid-point of the tape, and/or several additional patterns could be provided along the length of the tape.

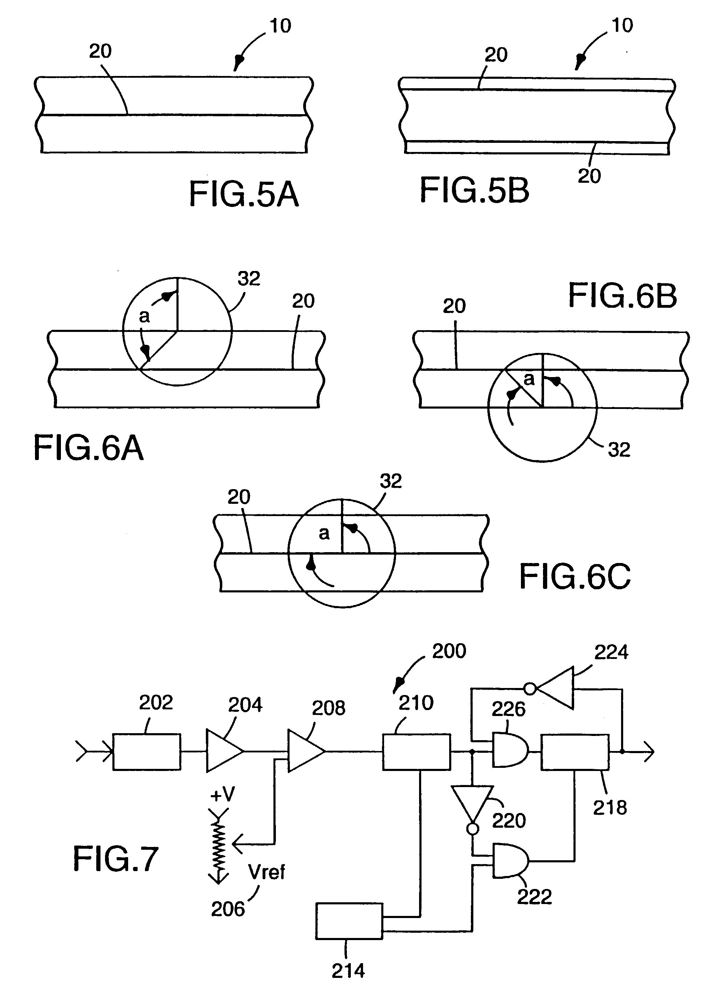

One or more stripes 20 could also be used in a method for centering a transverse scanning head with respect to tape 10. For example, one longitudinal stripe 20 could be provided in the middle of the width of tape 10, as shown in FIGURE 5A. In the alternative, two stripes 20 could be used, each an equal distance from the edge of tape 10, as shown in FIGURE 5B.

A method for centering a transverse scanning head over magnetic tape 10 is illustrated in FIGURES 6A-6C. If the scanning head is an arcuate scanner, the arcuate scanner motor has a position transducer which monitors the angular position of each transducer on the drum. By comparing the actual angle (rotation position) of the scanner when the read head detects stripe 20 in FIGURES 5A to the desired angle when the center of the scanner arc is centered on tape 10, the direction to move the scanner to properly center it can be determined.

If the scanner center is located above center stripe 20, position angle a of drum path 32 will be greater than angle a when the scanner center is located over the center stripe as illustrated in FIGURES 6A and 6C. Likewise, if the scanner center is located below center stripe 20, position angle a of drum path 32 will be less than angle a when the scanner center is located over the center stripe, as illustrated in FIGURES 6B and 6C.

A similar comparison can be performed using tape 10 shown in FIGURE 5B by using one or both edge stripes 20 to center the scanning arc on the tape. One advantage of using the stripe configuration of FIGURE 5B over FIGURE 5A is that the configuration of FIGURE 5B can be used to adjust the write timing so that data written on tape 10 will always fit on the recorded arc. By pre-measuring the time it takes a read head to pass from first stripe 20 to the second stripe, and comparing that time to the known desired time, an error signal can be generated to change the write clock or rotational speed of the scanner drum. This will adjust either the write time or the rotational time so that the correct amount of data will fit on the tape.

In order for the drive to sense the pattern of stripes 20, the drive must have a filtering system for separating the signal generated from the pattern of stripes from the signal resulting from reading/writing data on data tracks 30. Stripes 20 are recorded to full media depth by a direct current to create a low frequency signal when read by a transverse read head. Data tracks 30 are recorded at limited depth and have a short wavelength signal. Thus, circuitry must be provided to extract the low frequency pattern from the short wavelength data so that the presence of the pattern can be readily detected.

The system should be highly redundant to ensure that the pattern is not missed or incorrectly interpreted. This may be accomplished by providing the pattern along a 30.5 cm (1 foot) length of tape. If each data track 30 has a center-to-center spacing of 13 µm (0.0005 inches), then a 30.5 cm (1 foot) length of tape provides an opportunity for 24,000 separate readings of the signal. The signal is also detectable at any tape speed because the stripe is uniformly transversely magnetized over the length of the stripe. The signal amplitude does not significantly vary with linear tape speed, and can be detected even if the linear motion of the tape is stopped.

A possible detection system 200 for detecting a single stripe 20 is shown in FIGURE 7. Detection system 200 consists of a filter system that removes data and noise from the composite signal of the pattern overwritten by formatted data. Next, an amplitude qualification step is performed to accept only signals that are larger than a reference level. This output is then further qualified by checking for the known repetitive characteristics of the signal to further eliminate false or borderline inputs that might be misinterpreted as a valid pattern signal, such as drop-outs and interference. A media position or timing window could also be part of this qualification.

The entire composite read signal that includes the low frequency pattern and the data signal is filtered to remove the data frequency components. The filter system 202 may be a simple low pass filter if the pattern is comprised of only one stripe 20, or a narrow bandpass filter, rectifier and low pass filter if the pattern is comprised of a series of equally spaced longitudinally recorded transverse signals that when scanned transversely, generate a low frequency of a limited number of cycles, such as is shown in FIGURE 4D. It is then amplified by amplifier 204 and compared to a voltage reference 206. When the signal exceeds the reference voltage 206, a logic level true is generated by an amplitude comparator 208 which sets a conventional set/reset flip-flop 210. Flip-flop 210 is reset by a start gate pulse that is generated at the beginning of the read head scan across the tape by timing circuit 214. Thus, flip-flop 210 is set whenever a transverse signal is detected during a read window (gate) set by timing circuit 214. The read window may be the entire width across the tape or a series of smaller windows, such as for detecting transverse signals in bands across the tape. The read windows are derived from the angular position encoder on the scanning head/drum motor.

If flip-flop 210 is set sometime during the read window, the flip-flop increments a counter 218. Counter 218 is reset at the end of the read window if a transverse signal is not detected during the window by an inverter 220 and AND gate 222 .

After a predetermined number of consecutive transverse signals are detected in adjacent scans, counter 218 counts up to its maximum count value (for instance 4) and is prevented from counting higher by a feedback counter limiter consisting of inverter 224 and AND gate 226. The valid signal goes true when the predetermined number of transverse signals on consecutive scans is detected. Counter 218 is reset if a transverse signal is not detected in a scan and the qualifying count process starts over.

This qualifying method may be implemented in actual logic circuits as shown in FIGURE 7 and described herein or in microprocessor firmware code if the microprocessor is supplied with the amplitude comparator output and the read window timing signals.

The patterns of magnetically polarized stripes 20 described herein can be used to provide information about the characteristics of a length of magnetic tape 10 to a magnetic tape drive. The tape drive should have a read/write head capable of reading/writing on the transverse data tracks 30. First, a length of magnetic tape 10 is provided in a magnetic recording drive. Tape 10 may be provided in a cartridge (not shown). Next, tape 10 is driven past the transverse scanning read/write head, which senses the pattern on the tape. The pattern is then separated from the signal (if any) generated from reading/writing the data tracks. The resultant low frequency signal is then compared with reference signals stored in the memory of the drive, thereby allowing the drive to decode the information stored in the pattern. The drive then makes adjustments as necessary to respond to the information received.

For example, pattern 28 of stripes 20 could be used to indicate that the transverse scanning head has reached one end of the length of tape 10. Magnetically polarized stripe 26 could be used as a warning signal to the drive. As the transverse scanning head begins to pass over warning stripe 26, the drive senses the stripe and finishes recording the data stored in its memory, which is recorded on either side of the stripe. When the transverse scanning head crosses over pattern 28, the drive recognizes that it has reached the first end of tape 10. The direction of travel of tape 10 could then be reversed, or the tape could be exited from the drive, as appropriate.

Similarly, pattern 18 could be used to indicate that the transverse scanning head has reached the opposite end of the length of tape 10. Magnetically polarized warning stripe 22 could be used as a warning signal to the drive, as described above. Pattern 18 and warning stripe 22 would perform the same function as pattern 28 and warning stripe 26, except for the other end of tape 10. Preferably, pattern 18 would differ from pattern 28 so that the drive would know at which end of tape 10 it was reading/writing on. Pattern 18 and warning stripe 22 could also be used to indicate to the drive the load point of the tape so that the drive can begin writing on the tape.

Pattern 24 could be placed at the mid-point of the length of tape 10, thereby identifying the mid-point of the length of the tape. Additional patterns 24 could be provided used to indicate further locations on the tape, e.g., one-quarter and three-quarter, or one-tenth, two-tenth, etc. Preferably, each pattern 24 would differ from patterns 18 and 28, if present, and would differ from each other, thereby allowing the drive to index to a particular location on the length of tape 10.

Additional patterns, such as patterns 18, 24, and 28, could be used to provide information to the drive about the type of tape being used such as tape length, media type, recording density, format, etc. Warning stripes similar to warning stripes 22 and 26 could be provided on either side of each such pattern of stripes 20 to allow the scanning head to finish recording data before reaching the pattern. Those skilled in the art will recognize that the patterns disclosed herein can be used to provide other kinds of information to the drive.

Although the above description of the invention often refers to the use of a pattern of stripes, those skilled in the art will recognize that in many cases the pattern can be replaced by a single stripe, which could convey additional information based on its position across the width of the tape. For example, a single stripe located in the bottom half of the width of the tape could indicate the beginning of the tape, while a single stripe located in the top half of the tape could indicate the end of the tape.

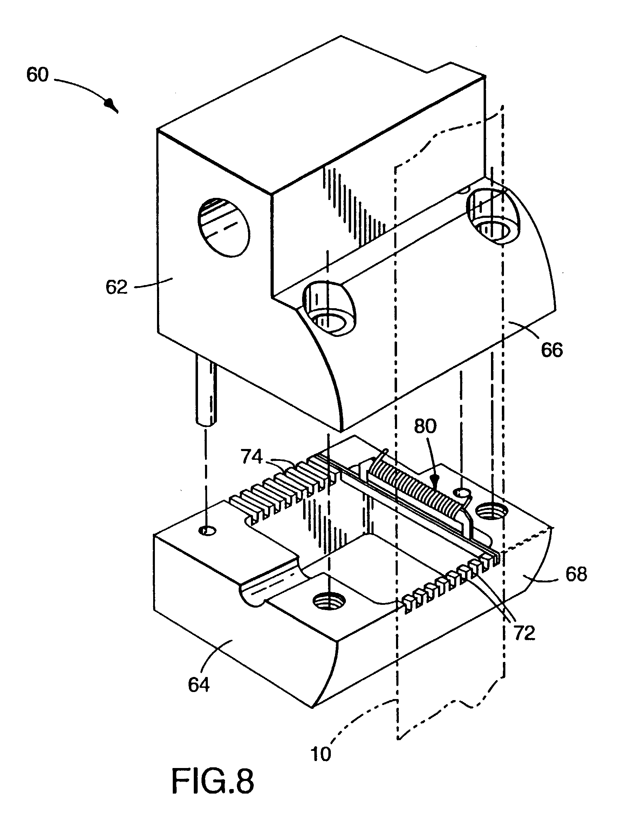

The manner of making stripes 20 will now be described with reference to FIGURES 8-10. Stripes 20 can be made by recording head 60 shown in FIGURE 8. Recording head 60 is comprised of upper housing 62, lower housing 64, and at least one core structure 80 housed within and between the two housings. Upper housing 62 and lower housing 64 have front surfaces 66 and 68, respectively, which face toward tape 10 on which stripes 20 are desired to be recorded.

Lower housing 64 has a plurality of slots 72, each of which is parallel to the length of head 60, extending across the width of front surface 68 of the lower housing. Lower housing 64 also has a plurality of slots 74, each of which is parallel to and corresponds to the first plurality of slots 72, extending across the width of the rear portion of the lower housing. Each pair of slots 72 and 74 is configured to hold one core structure 80. Core structures 80 are contained within housings 62 and 64 except for the tip of each core structure, which may protrude from front surface 68 of the lower housing.

Tape 10 is moved past head 60 as shown in FIGURE 8. A plurality of stripes 20 can be recorded on tape 10 by providing a plurality of core structures 80. The spacing of stripes 20 across the width of tape 10 can be easily selected by choosing in which slots 72 and 74 to place them. In the alternative, core structures 80 could be placed in every slot 72 and 74, and each core structure could be wired separately so that external circuitry (not shown) could be used to independently turn on or off any or all of the core structures.

It should be noted that stripes 20 are magnetically polarized substantially transverse to the length of tape 10, not longitudinally polarized as is conventionally done. This is accomplished by core structure 80, as discussed below.

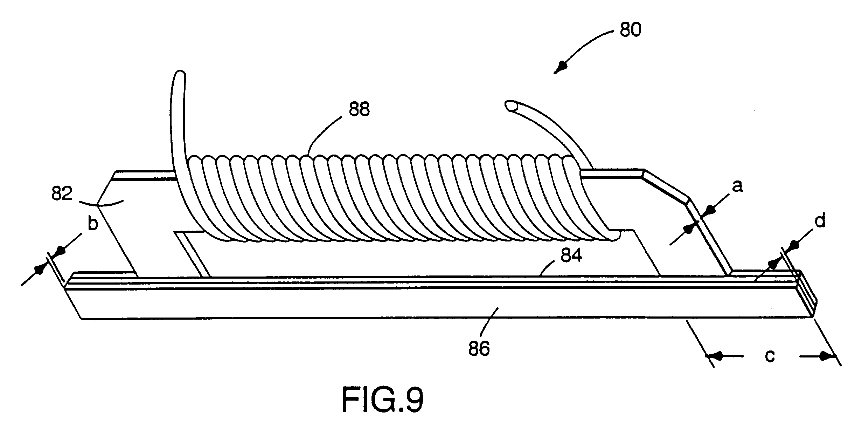

Core structure 80 is comprised of C-shaped magnetic conductor or core 82, coil 88 wrapped around the C-shaped core, bar 86, and spacer 84, as shown in FIGURE 9. C-shaped core 82 is preferably made of a high magnetic permeability, low coercivity, high magnetic saturation material such as AlFeSil (85% iron 9% silicon, 6% aluminum), or Carpenter High Permeability 49 Alloy (48% nickel, 51.13% iron, 0.35% silicon, 0.50% manganese, and 0.02% carbon), both of which are available from Carpenter Metals Co., Reading, Pennsylvania. C-shaped core 82 preferably has a width a of about 150 µm. Coil 88 can be comprised of 150 turns of copper wire having a diameter of about 50 µm. Bar 86 is preferably made of the same material as C-shaped core 82 and has a width d of about 150 µm. Spacer 84 is preferably made from copper or brass and has a width b of from about 19 µm to 51 µm. The width d of spacer 84 defines the width of the recording gap of head 60.

The depth of the recording gap of head 60 is defined by the distance c from front surface 68 of lower housing 64 to where C-shaped core 82 no longer overlaps bar 86.

In order to place core structures 80 closely adjacent each other, it may be necessary to alternate core structures which have coils 88 that are above and below slots 72 and 74 in lower housing 64. (This can be most easily pictured by simply turning core structures 80 as shown in FIGURE 9 upside down.) This allows core structures 80 to be packed closely together without having their coils 88 interfering with each other.

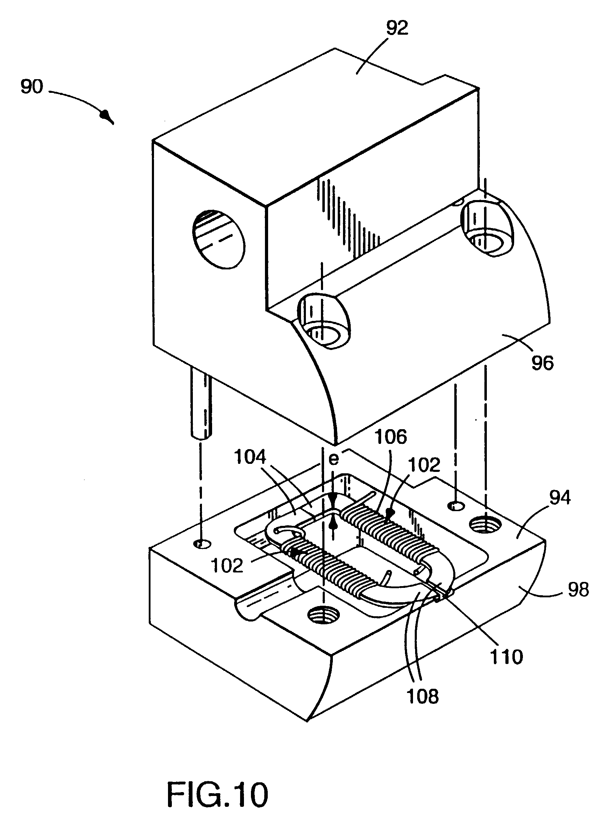

An alternative embodiment of a head for recording stripe 20 is shown in FIGURE 10. Recording head 90 is comprised of upper housing 92, lower housing 94, and a pair of core structures 102 housed within and between the two housings. Upper housing 92 and lower housing 94 have front surfaces 96 and 98, respectively, which face toward tape 10 on which stripe 20 is desired to be recorded.

Core structures 102 are comprised of coils 106 wrapped around C-shaped cores 104. Core structures 102 are preferably made of a high magnetic permeability, low coercivity, high magnetic saturation material such as AlFeSil or Carpenter High Permeability 49 Alloy, described above. Coils 106 are preferably comprised of 75 turns of copper wire having a diameter of about 50 µm on each core structure 102. The two coils 106 should be wired together so that their magnetic fields add.

Core structures 102 are contained within housings 92 and 94 except for the tips 108 of each core structure, which may protrude from front surface 98 of the lower housing. Tips 108 of core structures 102 are separated by spacer 110. Spacer 110 is preferably made from copper or brass and separates tips 108 from each other by from about 19 µm to 51 µm. The magnitude of this separation defines the width of the recording gap of head 90.

C-shaped cores 104 each have a width e. However, the width of one C-shaped core 104 can be made larger than the other. If the width of one of the cores 104 is made several times larger than the width of the other core structure, then the magnetic flux concentration at the gap facing edge of the thinner C-shaped core will be several times as great as the flux concentration along the gap facing edge of the wider C-shaped structure. Thus, the field strength can be adjusted so that only a single magnetic path is recorded on tape 10, the path being coincident with the gap facing edge of the thinner core 104.

Another method of making stripe 20 would be to have a second pass by the recording head, in the same direction as the first pass, wherein the head is slightly displaced transversely across the width of tape 10 from the first stripe. This might provide a stripe 20 having improved symmetry and amplitude.

Stripes 20 could be recorded by using a pulsed or continuous magnetic field. In the alternative, a permanent magnet could be used to record a stripe 20, although it is believed that it would be difficult to record multiples stripes on the tape during a single pass of the tape by the magnet.

## Claims

1. A magnetic tape having two ends, wherein the tape has:
- a plurality of data tracks (30) which span at least a portion of the width of the tape (10), and
- a magnetic pattern (18;24;28) on at least one portion (12;14;16) of the tape (10), the pattern (18;24;28) comprising a plurality of parallel, magnetically polarized stripes (20) spaced transversely across the width of the tape (10), the stripes (20) being parallel to the length of the tape (10),
**characterized in that**
- the stripes (20) have a direction of magnetic polarization substantially parallel to the width of the tape (10), and
- the magnetic polarization of each of the stripes (20) is uniform and continuous.

2. The tape of claim 1, further including a second pattern (18;24;28) positioned at another portion (12;14;16) of the tape (10), the second pattern (18;24;28) comprising a second plurality of parallel, magnetically polarized stripes (20) spaced transversely across the width of the tape (10) from each other, the stripes (20) being parallel to the length of the tape (10), wherein the stripes (20) have a direction of magnetic polarization substantially parallel to the width of the tape (10), and the magnetic polarization of each of the second plurality of stripes (20) is uniform and continuous.

3. The tape of claim 1 or 2, wherein each pattern (18;24;28) is recorded to a depth sufficient to ensure that the data tracks (30) will not significantly affect the magnetic properties of the pattern (18;24;28) .

4. The tape of claim 1, characterized by
- a first end portion, a middle portion, and a second end portion, and
- a first magnetic pattern (18) on the first end portion (12) and a second magnetic pattern (28) on the second end portion (16), wherein each pattern (18,28) comprises a plurality of parallel, magnetically polarized stripes (20) spaced transversely across the width of the tape (10), the stripes (20) being parallel to the length of the tape (10), wherein the stripes (20) have a direction of magnetic polarization substantially parallel to the width of the tape (10), wherein the magnetic polarization of each of the stripes (20) is uniform and continuous.

5. The tape of claim 4, further including two polarized stripes (22,26) parallel to the length of the tape (10), wherein the stripes (22,26) have a direction of magnetic polarization substantially transverse to the length of the tape (10), wherein one stripe (22) is positioned on the first end portion (12) of the tape (10) on the side of the first pattern (18) nearer the middle portion (16) of the tape (10) and another stripe (26) is positioned on the second end portion (16) of the tape (10) on the side of the second pattern (28) nearer the middle portion (16) of the tape (10).

## Patentansprüche

1. Magnetisches Aufzeichnungsband mit zwei Enden, wobei das Band aufweist:
- mehrere Datenspuren (30), die mindestens über einen Teil der Breite des Bandes (10) verlaufen, und
- ein Magnetmuster (18;24;28) auf mindestens einem Abschnitt (12;14;16) des Bandes (10), wobei das Muster (18;24;28) eine Vielzahl paralleler, magnetisch polarisierter Streifen (20) aufweist, die quer über die Breite des Bandes (10) hinweg beabstandet sind, und wobei sich die Streifen (20) parallel zu der Länge des Bandes (10) erstrecken,
**dadurch gekenzeichnet, daß**
- die Streifen (20) eine magnetische Polarisierungsrichtung aufweisen, die im wesentlichen parallel zu der Breite des Bandes (10) verläuft, und
- die magnetische Polarisierung jedes Streifens (20) gleichförmig und fortlaufend ist.

2. Band gemäß Anspruch 1, ferner mit einem zweiten Muster (18;24;28), das an einem anderen Abschnitt (12;14;16) des Bandes (10) angeordnet ist, wobei das zweite Muster (18; 24;28) eine zweite Vielzahl paralleler, magnetisch polarisierter Streifen (20) aufweist, die quer über die Breite des Bandes (10) hinweg voneinander beabstandet sind, wobei sich die Streifen (20) parallel zu der Länge des Bandes (10) erstrecken, wobei die Streifen (20) eine magnetische Polarisierungsrichtung aufweisen, die im wesentlichen parallel zu der Breite des Bandes (10) verläuft, und wobei die magnetische Polarisierung jedes Streifens der zweiten Vielzahl von Streifen (20) gleichförmig und fortlaufend ist.

3. Band nach Anspruch 1 oder 2, bei dem jedes Muster (18;24; 28) bis in eine ausreichende Tiefe aufgezeichnet ist, die gewährleistet, daß die Datenspuren (30) die Magneteigenschaften des Musters (18;24;28) nicht signifikant beeinträchtigen.

4. Magnetband nach Anspruch 1, gekennzeichnet durch
- einen ersten Endabschnitt, einen mittleren Abschnitt und einen zweiten Endabschnitt, und
- ein erstes Magnetmuster (18) an dem ersten Endabschnitt (12) und ein zweites Magnetmuster (28) an dem zweiten Endabschnitt (16), wobei jedes Muster (18,20) eine Vielzahl paralleler, magnetisch polarisierter Streifen (20) aufweist, die quer über die Breite des Bandes (10) hinweg voneinander beabstandet sind, wobei sich die Streifen (20) parallel zu der Länge des Bandes (10) erstrekken, wobei die Streifen (20) eine magnetische Polarisierungsrichtung aufweisen, die im wesentlichen parallel zu der Breite des Bandes (10) verläuft, und wobei die magnetische Polarisierung jedes Streifens der zweiten Vielzahl von Streifen (20) gleichförmig und fortlaufend ist.

5. Band gemäß Anspruch 4, ferner mit zwei polarisierten Streifen (22,26), die parallel zu der Länge des Bandes (10) verlaufen, wobei die Streifen (22,26) eine magnetische Polarisierungsrichtung aufweisen, die im wesentlichen quer zu der Länge des Bandes (10) verläuft, wobei der eine Streifen (22) an dem ersten Endabschnitt (12) des Bandes (10) an derjenigen Seite des ersten Musters (18) positioniert ist, die näher zu dem mittleren Abschnitt (16) des Bandes (10) gelegen ist, und der andere Streifen (26) an dem zweiten Endabschnitt (16) des Bandes (10) an derjenigen Seite des zweiten Musters (28) positioniert ist, die näher zu dem mittleren Abschnitt (16) des Bandes (10) gelegen ist.

## Revendications

1. Bande magnétique comportant deux extrémités, dans laquelle la bande comprend :
- une pluralité de pistes de données (30) qui traversent au moins une partie de la largeur de la bande (10), et
- une configuration magnétique (18 ; 24 ; 28) sur au moins une partie (12 ; 14; 16) de la bande (10), la configuration (18 ; 24 ; 28) comprenant une pluralité de pistes magnétiques (20) polarisées magnétiquement, parallèles, espacées transversalement à travers la largeur de la bande (10), les pistes magnétiques (20) étant parallèles à la longueur de la bande (10),
caractérisée en ce que
- les pistes magnétiques (20) présentent une direction de polarisation magnétique sensiblement parallèle à la largeur de la bande (10), et
- la polarisation magnétique de chacune des pistes magnétiques (20) est uniforme et continue.

2. Bande selon la revendication 1 comprenant, de plus, une seconde configuration (18 ; 24 ; 28) positionnée à une autre partie (12 ; 14 ; 16) de la bande (10), la seconde configuration (18 ; 24 ; 28) comprenant une seconde pluralité de pistes magnétiques (20) polarisées magnétiquement, parallèles, espacées les unes des autres transversalement à travers la largeur de la bande (10), les pistes magnétiques (20) étant parallèles à la longueur de la bande (10), dans laquelle les pistes magnétiques (20) présentent une direction de polarisation magnétique sensiblement parallèle à la largeur de la bande (10) et la polarisation magnétique de chacune de la seconde pluralité de pistes magnétiques (20) est uniforme et continue.

3. Bande selon la revendication 1 ou 2, dans laquelle chaque configuration (18 ; 24 ; 28) est enregistrée à une profondeur suffisante pour garantir que les pistes de données (30) n'affecteront pas sensiblement les propriétés magnétiques de la configuration (18 ; 24 ; 28).

4. Bande selon la revendication 1, caractérisée par
- une première partie d'extrémité, une partie centrale et une seconde partie d'extrémité, et
- une première configuration magnétique (18) sur la première partie d'extrémité (12) et une seconde configuration magnétique (28) sur la seconde partie d'extrémité (16), dans laquelle chaque configuration (18, 28) comprend une pluralité de pistes magnétiques (20) polarisées magnétiquement, parallèles, espacées transversalement à travers la largeur de la bande (10), les pistes magnétiques (20) étant parallèles à la longueur de la bande (10), dans laquelle les pistes magnétiques (20) présentent une direction de polarisation magnétique sensiblement parallèle à la largeur de la bande (10), dans laquelle la polarisation magnétique de chacune des pistes magnétiques (20) est uniforme et continue.

5. Bande selon la revendication 4 comprenant, de plus, deux pistes magnétiques polarisées (22, 26) parallèles à la longueur de la bande (10), dans laquelle les pistes magnétiques (22, 26) présentent une direction de polarisation magnétique sensiblement transversale à la longueur de la bande (10), dans laquelle une piste magnétique (22) est positionnée sur la première partie d'extrémité (12) de la bande (10) du côté de la première configuration (18) plus proche de la partie centrale (16) de la bande (10) et une autre piste magnétique (26) est positionnée sur la seconde partie d'extrémité (16) de la bande (10) du côté de la seconde configuration (28) plus proche de la partie centrale (16) de la bande (10).
